(19) Europäisches Patentamt
European Patent Office
Office européen des brevets

(11) EP 4 201 578 A1

(12) EUROPEAN PATENT APPLICATION

(43) Date of publication:
28.06.2023 Bulletin 2023/26

(21) Application number: 21383218.1

(22) Date of filing: 24.12.2021

(51) International Patent Classification (IPC):
B23K 26/342 (2014.01)    B21D 19/08 (2006.01)
B22F 10/40 (2021.01)    B22F 12/20 (2021.01)
B23K 37/00 (2006.01)    B23K 9/04 (2006.01)
B23K 103/10 (2006.01)

(52) Cooperative Patent Classification (CPC):
B23K 37/003; B22F 10/40; B22F 12/20;
B23K 26/342; B21D 28/26; B23K 9/042;
B23K 2103/10

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicants:
• Fundación Azterlan
48200 Durango, Vizcaya (ES)
• LORTEK S. COOP.
20240 Ordizia (Gipuzkoa) (ES)

(72) Inventors:
• Fernández Calvo, Ana Isabel
Durango (ES)
• Artola Beobide, Garikoitz
Durango (ES)
• Pérez, César
Ordizia (ES)
• Pereira, Juan Carlos
Ordizia (ES)

(74) Representative: Balder IP Law, S.L.
Paseo de la Castellana 93
5a planta
28046 Madrid (ES)

(54) **APPARATUS AND METHOD OF FORMING COUNTERSINKS AND/OR MOUSE HOLES IN A STAMPED HIGH STRENGTH ALUMINIUM SHEET**

(57)    Method of forming countersinks and/or mouse holes comprising the steps of obtaining by stamping a sheet (1) of a first high strength aluminium alloy in a T4 tempering state, the sheet (1) comprising at least a through hole or (2, 2', 2") a notch (3, 3', 3"), inserting a copper refrigerated tool (4, 4') through the hole or notch such that the tool (4) protrudes at least from one surface of the sheet (1) and fits snugly in the through hole (2, 2', 2") or notch (3, 3', 3"), depositing by a DED process a portion (5, 51) of a second high strength aluminium onto the sheet around the through hole (2, 2', 2") and/or notch (3, 3', 3") to form a countersink and/or a mouse hole. The method comprises refrigerating the tool to maintain the maximum instantaneous surface temperature of the tool (4, 4') below 300°C and cool down the temperature of the tool (4) to below 100°C in less than 2 seconds when the weld portion of the second alloy starts solidifying.

FIG.3C

EP 4 201 578 A1

**Description**

**TECHNICAL FIELD**

The present invention relates to methods and tools used to obtain countersinks and mouse holes in aluminium stamped sheets and more specifically to methods to obtain countersinks and mouse holes with unfavourable ratios between their wall height, sheet thickness, and their diameter.

**STATE OF THE ART**

Typical uses of a countersink that is formed into a sheet metal are to increase the stiffness of a structure, to generate a fitting geometry for an assembly or to generate a positioning feature. The common uses of countersinks are assembly bushings, ball joints, tubes, etc. while mouse holes are used for fitting rail joining.

Sheet metal stamping is one of the primary manufacturing processes worldwide, because it is able to produce a large volume of components at high speed and low cost. The need to reduce weight and costs in aircrafts and automobiles encourages manufacturers to choose lighter materials such as aluminium alloys in place of steel, and stamping in place of forging, machining or casting. However, aluminium alloys are not as formable as steel and handling their springback and fracture problems requires a high expertise in stamping process, and it has several limitations. This is more critical for the new high strength aluminium alloys as their plastic anisotropy and strain hardening indexes, which give a good idea of a material's formability, are unfavourable for stamping. Consequently, in order to stamp high strength aluminium components whose shape requires high levels of deformation, forming is usually performed at elevated temperature. An extra complexity arises this way for the process designer since temperature and metallurgical transformations must be also considered in the design to avoid defect formation.

Yield strength has been a driving factor since the early ages of aerospace engineering in the development of aluminium alloys. 7XXX alloys show a well-balanced fracture toughness to tensile strength ratio. In addition, 6XXX and 2XXX series are also used in structural components. Heat treatable wrought alloys (precipitation-hardenable) aluminum alloys include the 2XXX, 6XXX and 7XXX alloys. They are used in the automotive industry, aerospace industry, in construction of machines, appliances, and structures, as cooking utensils, as covers for housings for electronic equipment, as pressure vessels for cryogenic applications, and in innumerable other areas.

These alloys are difficult to obtain because they present high tearing tendency. The main drawback regarding the mentioned high strength aluminium series is that their elongation in aged condition is rather low. In order to overcome this issue, these aluminium sheets can be subjected to specific heat treatments in order to increase their formability being T4 tempering the most common.

The wall height (h) and diameter ($D_f$) of countersinks and mouse holes achievable for a given metal sheet thickness (e), by conventional stamping process, depend on the material formability. Above the formability limit, cracks or tearing defects are formed. This can be represented for reference in countersinks with the following formability criterion:

When

$$\frac{\left(D_f - 2(h + e)\right)^2}{D_f^2} > A_{gt\ punched}$$

the countersink is feasible to be manufactured in a conventional way.

Where $D_f$ stands for the inner diameter of the countersink, h stands for the wall height of the countersink, e stands for sheet metal thickness and $A_{gt}$ punched stands for the maximum uniform elongation of the material at the punched border. This last parameter is a measure of the material's ductility.

Thus, for a given countersink diameter, the formability of the geometry is reduced as the wall height and thickness increase and the material ductility decreases. The mouse holes behave as a half countersink.

Furthermore, when using Al 6XXX alloys which are hard to machine, due to the presence of hard intermetallics, there is need for application of additive manufacturing for developing near net shape product and for repairing. Usually, aluminium alloys are difficult to do laser processing because of its low absorptivity in the range of 1.06 $\mu$m laser wavelength. It has been observed that Laser based Directed Energy Deposition (L-DED) has been successful in processing of cast alloys. In this regard, it may be noted that maximum work is conducted in Al-Si-Mg alloys because of its good castability, low shrinkage due to large fraction of Al-Si eutectic however, the strength of the Selective Laser Melting (SLM) and L-DED processed product is moderate and their ductility is low. The popularly used aluminium alloys in aerospace and automobile industry are wrought alloys like 2XXX, 5XXX, 7XXX series though have medium to high strength and ductility; however, they are not processable by SLM and are difficult to process by L-DED, because of their tendency to get microcrack during the process resulting in development of product with poor structural integrity.

The recent advances on the process control, the configuration of specific hardware regarding optic heads and nozzles, and L-DED process parameters sets allows to successful depositing aluminium alloys with reduced heat input on the base material.

## DESCRIPTION OF THE INVENTION

The present invention allows to get countersinks and/or mouse holes with geometries not possible by conventional stamping processes, both cold and hot stamping, because of the formation of cracks. The present invention combines stamping process with a post-process by DED (Directed energy deposition) which uses a tool to position, cool the heat affected area by DED during the deposition and maintain the inner geometry of the countersink or mouse hole. In such a way that the properties of the hybrid component obtained are optimized thanks this cooled tool and new design geometries are available for joining stamped sheets.

Special cases of aluminium heat treatment alloys, such as 2198, 2024, 6082, 6111, 7025, 7075, are usually stamped in T4 state. Preferably, the aluminium sheets have a thickness higher than 1.5 mm and less than 3 mm.

The method of the present invention allows to manufacture hybrid countersinks and mouse holes obtained with these aluminium alloys by the direct quenching of DED.

A first aspect of the invention relates to a method of forming countersinks and/or mouse holes comprising the steps of

- obtaining a part by stamping (for example by hot or cold stamping or by a punching process) a sheet of a first high strength aluminium alloy in a T4 tempering state, the part comprising at least a through hole or notch (the size of hole or notch being adequate for obtaining a countersink or mouse hole),
- inserting a refrigerated tool (for example with internal cooling channels and or coil like system) through the hole such that the tool protrudes at least from one surface of the sheet and fits snugly in the through hole or notch, the tool being of a high thermal conductivity copper alloy
- depositing by a DED (directed energy deposition) process a portion of a second high strength aluminium onto the sheet around the through hole or notch refrigerating the tool to
- maintain the maximum instantaneous surface temperature of the tool below 300° C and,
- cool down the temperature of the tool to below 100°C in less than 2 seconds when the welded portion of the second alloy starts solidifying

The refrigerated tool is used to position and cool the heat affected area (HAZ) generated by DED processing during the metal deposition and maintain the inner geometry of the countersink or mouse hole.

The raw material condition in the sheet is the T4 tempering, for this reason the control over the energy input on the DED process is needed, to ensure the minimum laser energy density delivered for each Aluminium based alloy to be deposited/processed, because on each particular application in terms of form, shape and thickness in the sheets, is necessary to generate the adequate conditions in order to ensure that T4 tempering is maintained. Optionally, as T4 condition is maintained, the application of artificial ageing treatment will allow to achieve a T6 heat treatment condition for the strengthening after the metal deposition.

The present invention keeps the heat affected zone (HAZ) and near areas below ageing temperatures and thus, the T4 condition of the whole part is maintained and/or preserved. The tool refrigeration should be enough to keep HAZ of the aluminium sheet and welded portion of the second material (for example welded runs around the hole or notch) below ageing temperatures for T4 condition and ensure a cooling rate on the solidification of the welded portion that achieves proper quenching. In practice the maximum instantaneous tool surface temperature, which is generated in the melt pool of the welded portion, must be kept below 300°C and it must cool down to below 100°C in less than 2 seconds after the weld bed starts solidifying. This is ensured by the refrigeration of the tool and also by using high thermal conductivity copper alloy for the manufacture of the tool, so that the heat of the weld can readily be transferred for example into a cooling fluid that runs through the cooling tool.

The tool refrigeration should be enough to avoid tool sticking of DED material, which is achieved by using a copper alloy in the tool surface. The reason is the low absorptivity of copper working with a laser wavelength over 1000 nm, and that the copper artefact is not in the deposition path of the aluminium (raw material) with the sheet (substrate). Alternative non-stick weld backing materials that avoid sticking, such as steel or ceramic backing, have poor thermal conductivity and tendency to hot cracking.

In some embodiments the tool is refrigerated by internal cooling channels and or a coil like system configurated for the circulation of a refrigerating fluid.

In some embodiments the tool comprises a cylindrical or mouse hole shaped part configured to be fitted in the hole of the stamped sheet. The method of the present invention further avoids DED sticking to the tool and thus it maintains the internal countersink or mouse hole geometry. The present invention is in such a way that the mechanical properties of the countersink or mouse hole are optimized thanks this refrigerated tool.

Tool non-sticking could be improved by the use of special coating or die lubricant products.

Preferably the first high strength aluminium alloy is selected from 2XXX, 6XXX and 7XXX. Copper is the principal alloying element in 2XXX series alloys, often with magnesium as a secondary addition. These alloys require solution heat treatment to obtain optimum properties; in the solution heat-treated condition, mechanical properties are similar to, and sometimes exceed, those of low-carbon steel. Alloys in the 2XXX series are particularly well suited for parts and structures requiring high strength-to-weight ratios and are commonly used make truck and aircraft wheels, truck suspension parts, aircraft fuselage and wing skins, structural parts, and those parts requiring good strength at temperatures up to 150 °C . Alloys in the 6XXX series contain silicon and magnesium approximately in the proportions required for formation of magnesium silicide ($Mg_2Si$), thus making them heat treatable. Although not as strong as most 2XXX and 7XXX alloys, 6XXX series alloys have good formability, weldability, machinability, and corrosion resistance, with medium strength. Alloys in this heat-treatable group may be formed in the T4 temper (solution heat treated but not precipitation heat treated) and strengthened after forming to full T6 properties by precipitation heat treatment. Zinc, in amounts of 1 to 8%, is the major alloying element in 7XXX series alloys, and when coupled with a smaller percentage of magnesium results in heat-treatable alloys of moderate to very high strength. Usually other elements, such as copper and chromium, are added in small quantities. Dilute additions of scandium also improve properties. 7XXX series alloys are used in airframe structures, mobile equipment, and other highly stressed parts. And specially of aluminium heat treatment alloys, such as 2198, 2024, 6061, 6082, 6111, 7025, 7075. The Chemical composition limits of each alloy are listed, for example, in the Registration Record Sheets for Wrought Alloys (TEAL Sheets) -International Alloy Designations and Chemical Composition Limits for Wrought Aluminum and Wrought Aluminum Alloys by The Aluminum Association, and the corresponding Addendum.

Preferably the second high strength aluminium alloy of the portion deposited by DED is the substantially the same high strength aluminium alloy used to obtain the stamped sheet. The second high strength aluminium is selected preferably from 2XXX, 6XXX and 7XXX and more specially of aluminium heat treatment alloys, such as 2198, 2024, 6082, 6111, 7025, 7075.

In some embodiments the DED process comprises a laser. In some preferred embodiments a laser with a specific energy density in the range of 10 - 50 $J/mm^2$ is used.

The configuration of the optic head and coaxial nozzle with a laser spot between 1 to 2 mm ensure the deposition of multilayer material in an additive way on the different configurations and options stated in this patent.

The second strength aluminium alloy can be fed to the DED head as a metal powder or as a metal wire.

The sheet can comprise a vertical wall around the hole or notch. This wall is obtained in the stamping step thus forming a countersink or a mouse hole respectively. The vertical wall is substantially orthogonal to the stamped sheet.

The step of depositing by a DED process can comprise depositing at least one layer of the second high strength aluminium on the vertical wall in the form of a welded string to increase the height of the vertical wall.

In some embodiments the vertical wall comprises a crack area formed during the stamping process of the sheet. In such cases the step of depositing by a DED process can comprise depositing the portion of the second high strength aluminium over the crack area forming a welded spot. Alternatively, the step of depositing by a DED process can comprise depositing at least one layer of the second high strength aluminium in the form of a welded string around at least a part of the vertical wall covering the crack area.

In some embodiments the step of depositing by a DED process can comprise depositing at least one layer of the second high strength aluminium on the sheet in the form of a welded string around the hole or notch to obtain a welded vertical wall. Thus, a countersink or mouse hole can be obtained.

A second aspect of the invention relates to an apparatus comprising

- a copper refrigerated tool insertable through the hole or notch such that the tool protrudes at least from one surface of the sheet and fits snugly in the through hole or notch,
- a DED apparatus for depositing a portion of a second high strength aluminium onto the sheet around the through hole or notch,
  the refrigerated tool being configured to
- maintain the maximum instantaneous surface temperature of the tool below 300° C and,
- cool down the temperature of the tool to below 100°C in less than 2 seconds when the welded portion of the second alloy starts solidifying

In some embodiments the coper refrigerated tool comprises internal colling channels configurated for the circulation of a refrigerating fluid.

In some embodiments the coper refrigerated tool comprises a cylindrical or mouse hole shaped part configured to be fitted in the hole.

**BRIEF DESCRIPTION OF THE DRAWINGS**

To complete the description and in order to provide for a better understanding of the invention, a set of drawings is provided. Said drawings form an integral part of the description and illustrate embodiments of the invention, which should not be interpreted as restricting the scope of the invention, but just as examples of how the invention can be carried out. The drawings comprise the following figures:

Figure 1 shows a countersink obtained in a stamped sheet.
Figure 2 shows a mouse hole obtained in a stamped sheet with several cracks
Figure 3A shows a stamped sheet with a through hole made by punching.
Figure 3B shows a stamped sheet with a through hole and the refrigerated tool inserted through the hole.

Figure 3C shows a stamped sheet with a vertical wall formed around the hole of figures 3A and 3B by DED according to the invention.

Figure 4A shows a stamped sheet with a countersink with a crack in the vertical wall.

Figure 4B shows a stamped sheet with a countersink with a crack in the vertical wall and the refrigerated tool inserted through the hole

Figure 4C shows a stamped sheet with deposition of material by DED over the crack according to the invention.

Figure 4D shows a stamped sheet with deposition of material by DED over the crack in the form of circular runs around the vertical wall covering the crack area according to the invention.

Figure 5A shows a stamped sheet with a countersink with no cracks in the vertical wall.

Figure 5B shows a stamped sheet with a countersink with no cracks in the vertical wall and the refrigerated tool inserted through the hole

Figure 5C shows a stamped sheet with deposition of material by DED on the vertical wall in the form of circular weld runs to increase the height of the vertical wall, according to the invention.

Figure 6A shows a stamped sheet with a notch made by punching and the stamped sheet with a vertical wall formed around the notch according to the invention.

Figure 6B shows a stamped sheet with a mouse hole with cracks in the vertical wall and the stamped sheet with deposition of material by DED over the cracks in the form of "U-shape" runs around the vertical wall covering the crack area according to the invention.

Figure 6C shows a stamped sheet with a mouse hole with no cracks in the vertical wall and the stamped sheet with deposition of material by DED on the vertical wall in the form of "U-shape" weld runs to increase the height of the vertical wall, according to the invention.

Figure 7 shows a schematic sectioned side view of a conventional metal-powder deposition head which can be used in the process of the present invention.

Figure 8 shows a refrigerated tool suitable for countersinks according to one embodiment of to the invention.

Figure 9 shows a refrigerated tool suitable for mouse holes according to another embodiment of the invention.

## DESCRIPTION OF WAYS OF CARRYING OUT THE INVENTION

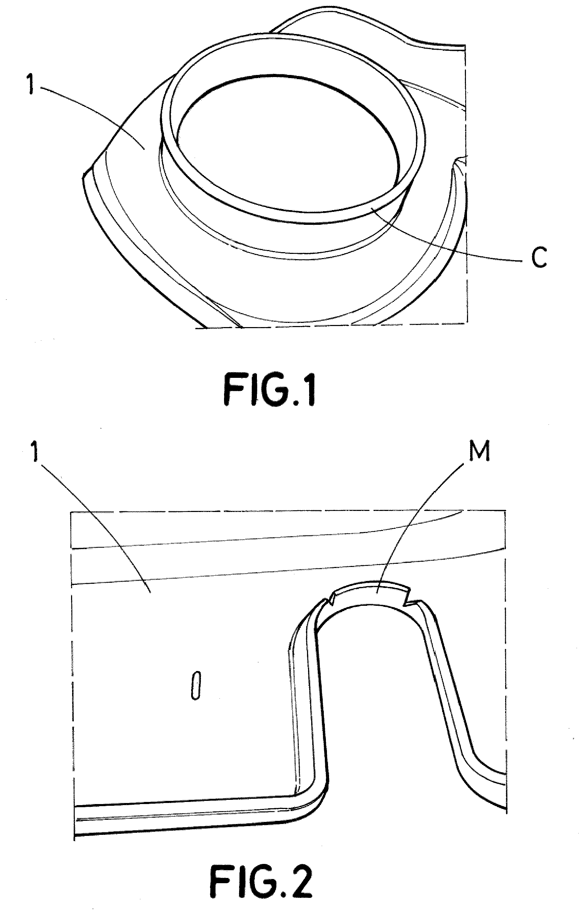

Figures 1 and 2 show a countersink C and a mouse hole M in a stamped sheet with a height, thickness and diameter obtainable with the method of the invention in high strength aluminium alloy.

The method of the invention comprising the steps of

- obtaining by stamping a sheet 1 of a first high strength aluminium alloy in a T4 tempering state, the sheet 1 comprising at least a through hole 2, 2', 2" or a notch 3, 3', 3"
- inserting a copper refrigerated tool 4,4' through the hole 2, 2', 2" or notch 3, 3', 3" such that the tool 4,4' protrudes at least from one surface of the sheet 1 and fits snugly in the through hole 2, 2', 2" or notch 3, 3', 3"

refrigerating the tool to

- maintain the maximum instantaneous surface temperature of the tool below 300° C and,
- cool down the temperature of the tool to below 100°C in less than 2 seconds when the welded portion of the second alloy starts solidifying

- depositing by a DED process a portion 5, 51 of a second high strength aluminium onto the sheet around the through hole 2, 2', 2" or notch 3, 3', 3"

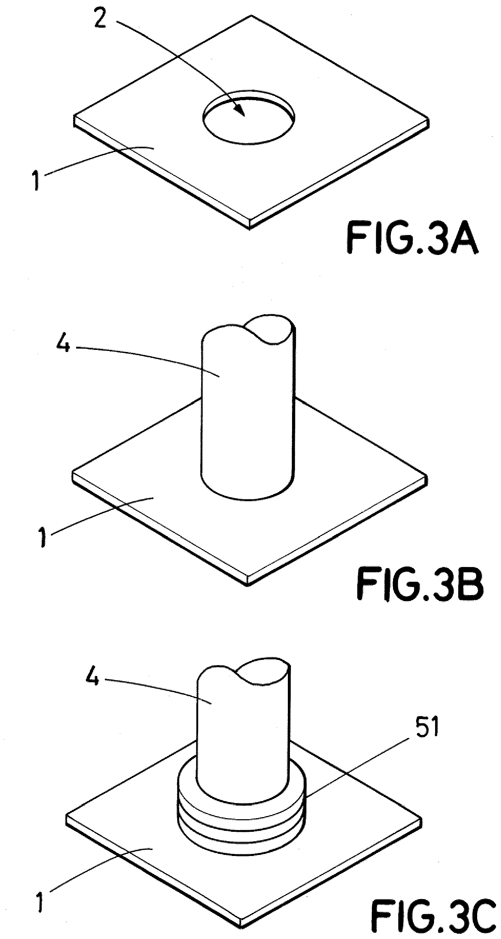

Figure 3A shows a stamped sheet 1 with a circular through hole 2. According to the invention a refrigerated cylindrical tool 4 in introduced in the hole 2 such that a part of the tool 4 protrudes upwards from the sheet 1 according to the horizontal position of the sheet 1 represented in figure 3B. The cylindrical tool 4 has a size and shape to fit snugly in the hole 2. A second high strength aluminium is deposited by a DED process onto the surface of the sheet 1, around the tool 4, in the form of a welded string (51) to obtain a welded vertical wall as shown in figure 3C. That way a countersink with a high wall can be easily obtained.

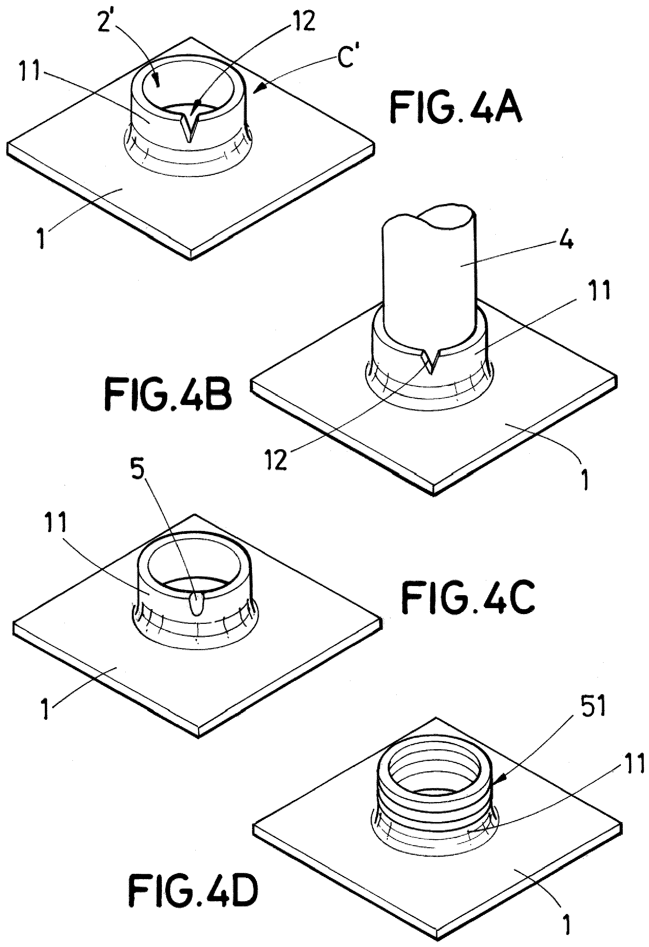

Figure 4A shows a stamped sheet 1 with a countersink C' with a crack 12 in the vertical wall 11. That kind of crack can be generated if the geometry of the countersink C is above the formability limit of the material of the sheet.

According to the invention a cylindrical tool 4 in introduced in the hole 2' of the countersink C' shown in figure 4A, such that a part of the tool 4 protrudes upwards from the sheet 1 according to the horizontal position of the sheet 1 as represented in figure 4B

In the embodiments shown in figures 4C-4D the crack 12 can be repaired by DED deposition of a second high strength aluminium over the crack 12 and the properties of the countersink are optimized. In figure 4C, DED deposition could be applied exclusively over the crack area 12 in the form of a welded spot 5. In figure 4D, DED deposition could be applied over the crack in the form of circular welding runs 51.

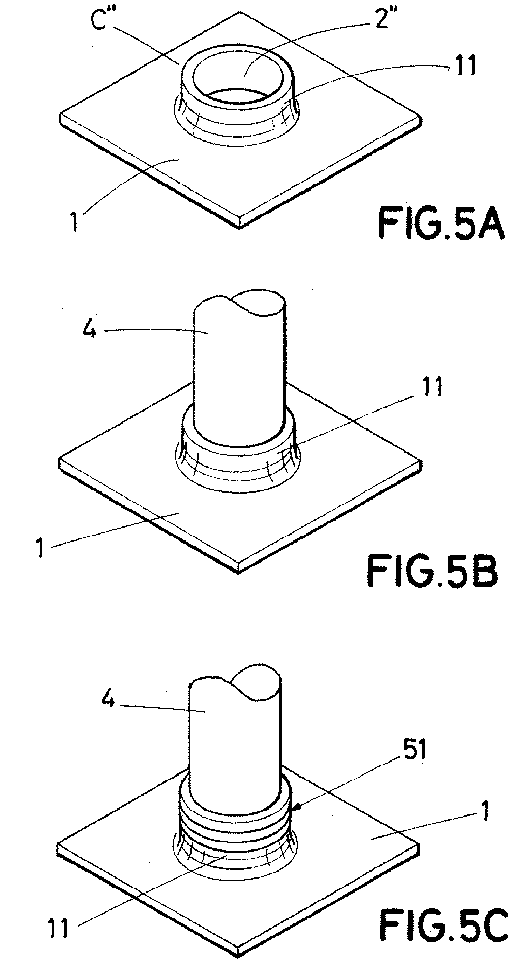

Figure 5A shows a stamped sheet 1 with a countersink C" with no cracks in the vertical wall 11, usually when the geometry of the countersink C" is below the formability limit of the material of the sheet.

Figure 5B, shows the tool 4 of the invention introduced in the hole 2" of the countersink C" of figure 5A such that a part of the tool 4 protrudes upwards from the sheet 1 according to the horizontal position of the sheet 1 represented in figure 5B.

In the embodiment shown in figure 5C, a second aluminium alloy is deposited by DED on the first wall 11 and several circular weld runs 51 are deposited until the required height of wall 11 is achieved. Being the wall height of the countersink C" well above the formability limit of the material achieved by any conventional hot or cold stamping processes.

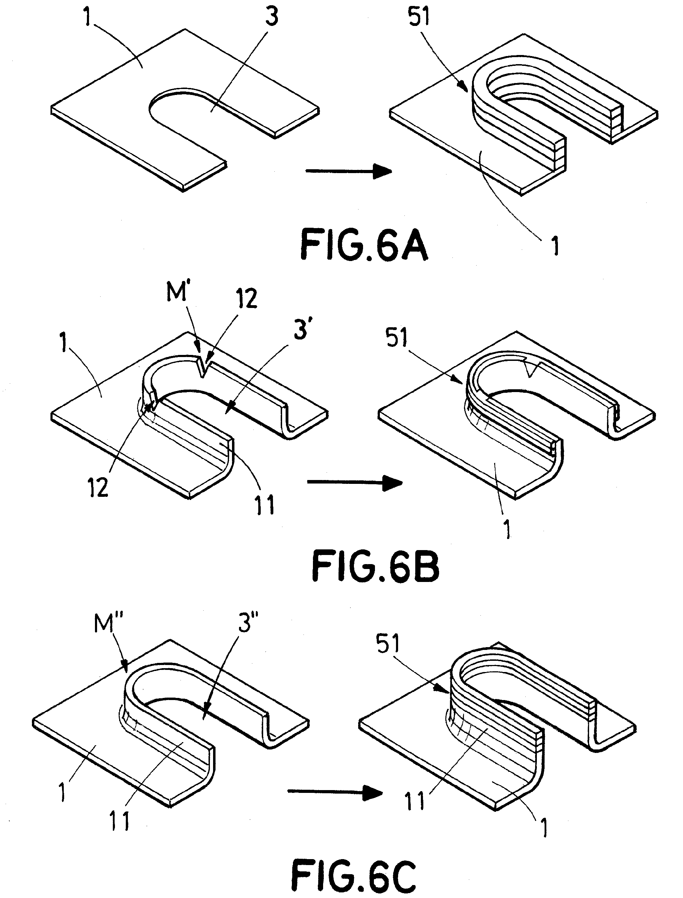

Figure 6A shows a stamped sheet 1 with a notch 3. According to the invention a refrigerated cylindrical tool 4' is introduced in the notch 3 such that a part of the tool 4' protrudes upwards from the sheet 1. The cylindrical tool 4' has a size and shape to fit snugly in the notch 3. A second high strength aluminium is deposited by a DED process onto the surface of the sheet 1, around the tool 4', in the form of a welded string (51) to obtain a welded vertical wall as shown in this figure 6A. That way a mouse hole with a high wall can be easily obtained.

Figure 6B shows a stamped sheet 1 with a mouse hole M' with a crack 12 in the vertical wall 11. That kind of crack can be generated if the geometry of the mouse hole M' is above the formability limit of the material of the sheet. According to the invention a cylindrical tool 4' in introduced in the notch 3' of the mouse hole M' such that a part of the tool 4' protrudes upwards from the sheet. The crack 12 can be repaired by DED deposition of a second high strength aluminium over the crack 12 and the properties of the mouse hole M' are optimized. According to figure 6B, DED deposition could be applied over the crack 12 of the mouse hole M' in the form of "U-shape" welding runs 51.

Figure 6C shows a stamped sheet 1 with a mouse hole M" with no cracks in the vertical wall 11, usually when the geometry of the mouse hole M" is below the formability limit of the material of the sheet. The tool 4' of the invention is introduced in the notch 3" of the mouse hole M" such that a part of the tool 4' protrudes upwards from the sheet. In the embodiment shown in figure 6C, a second aluminium alloy is deposited by DED on the first wall 11 and several "U-shape" weld runs 51 are deposited until the required height of wall 11 is achieved. Being the wall height of the mouse hole M" well above the formability limit of the material achieved by any conventional hot or cold stamping processes.

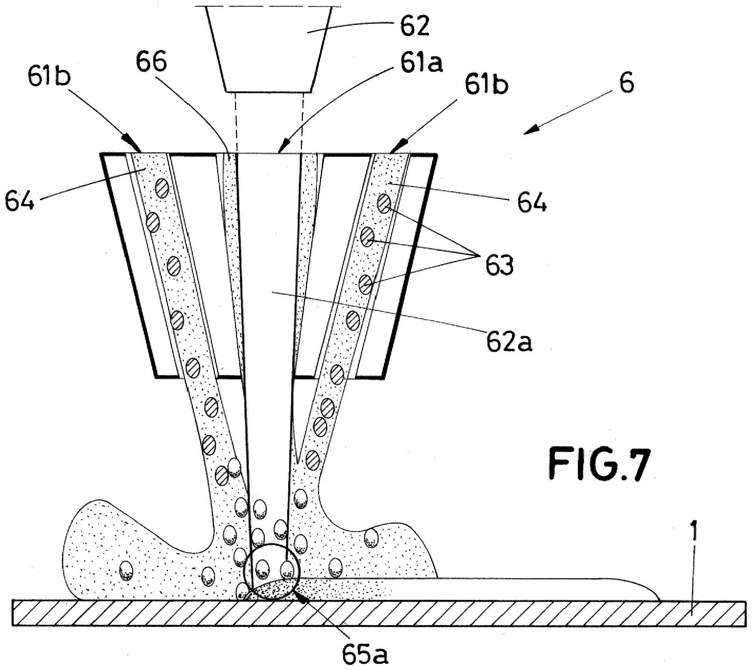

Figure 7 shows a conventional metal-powder deposition head 6 that can be used in the directed-energy deposition process of the present invention. The deposition head 61 comprises a center channel 61a and an outer ring channel -61b-. A laser beam 62a generated by a high-power laser source 62 travels through the center channel 61 and is focused at a focus 62b located at a target surface portion 65a of the upper surface 65b of a metal base substrate 65. A stream of inert shielding gas 66 is guided through the center channel 61a to the focus 62b at the target surface portion 65a. A stream of inert carrier gas 64 is guided through the outer ring channel 61b to the focus 62b at the target surface portion 65a. Particles of metal powder 63 fed into the stream of inert carrier gas 64 is also guided to the focus 62b such that the metal powder 63 melts at the focus 62b forming a melting pool where the molten metal bonds with the underlying target metal surface 65a to create a layer of deposited metal material 67 adhered to the target metal surface 65a of the metal base substrate.

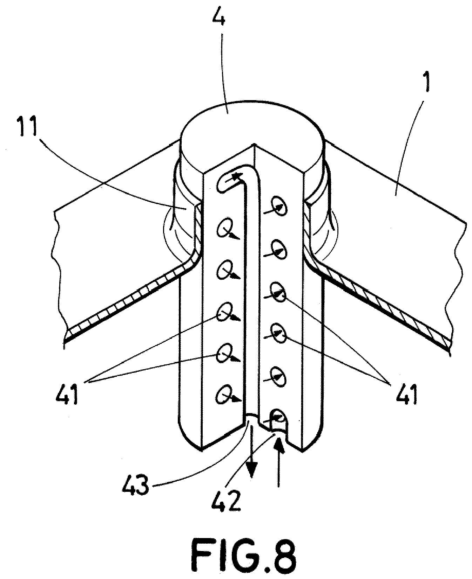

Figure 8 shows a tool 4 with cylindrical shape suitable to fit in a hole 2, 2', 2". The tool 4 comprises a refrigerating circuit configured for the circulation of a refrigerating fluid. The circuit comprises a fluid inlet (42), a spiral cooling channel (41) and a fluid outlet (43).

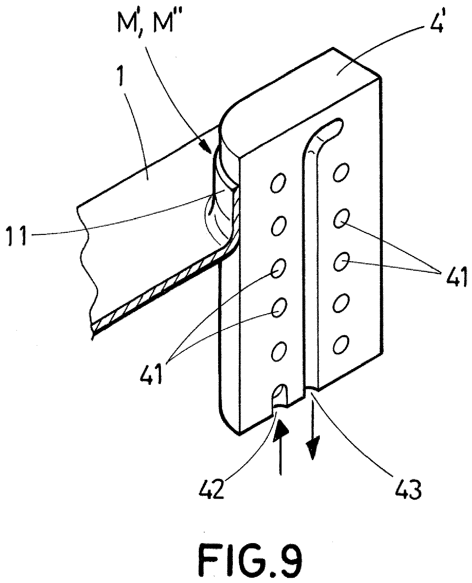

Figure 9 shows a tool 4' with mouse hole shape suitable to fit in a notch 3, 3', 3". The tool 4' comprises a refrigerating circuit configured for the circulation of a refrigerating fluid. The circuit comprises a fluid inlet (42), a spiral cooling channel (41) and a fluid outlet (43).

In this text, the terms first, second, third, etc. have been used herein to describe several devices, elements or parameters, it will be understood that the devices, elements or parameters should not be limited by these terms since the terms are only used to distinguish one device, element or parameter from another. For example, the first device could as well be named second device, and the second device could be named first device without departing from the scope of this disclosure.

In this text, the term "comprises" and its derivations (such as "comprising", etc.) should not be understood in an excluding sense, that is, these terms should not be interpreted as excluding the possibility that what is described and defined may include further elements, steps, etc.

On the other hand, the invention is obviously not limited to the specific embodiment(s) described herein, but also encompasses any variations that may be considered by any person skilled in the art (for example, as regards the choice of materials, dimensions, components, configuration, etc.), within the general scope of the invention as defined in the claims.

## Claims

1. Method of forming countersinks and/or mouse holes comprising the steps of

   - obtaining a part by stamping a sheet (1) of a first high strength aluminium alloy in a T4 tempering state, the part (1) comprising at least a through hole (2, 2', 2") or a notch (3, 3', 3"),
   - inserting a refrigerated tool (4, 4') through the hole or notch such that the tool (4) protrudes at least from one surface of the sheet (1) and fits snugly in the through hole (2,2', 2") or notch (3, 3', 3"), the tool being of a high thermal conductivity copper alloy,
- refrigerating the tool (4, 4') to

  - maintain the maximum instantaneous surface temperature of the tool (4) below 300°C,
  - cool down the temperature of the tool (4) to below 100°C in less than 2 seconds when the weld portion of the second alloy starts solidifying

  - depositing by a DED process a portion (5, 51) of a second high strength aluminium alloy onto the sheet around the through hole (2,2', 2") or notch (3, 3', 3"),

2. Method according to claim 1 wherein the first high strength aluminium alloy is selected from 2XXX, 6XXX and 7XXX

3. Method according to claim 2 wherein the second high strength aluminium alloy is selected from 2XXX, 6XXX and 7XXX

4. Method according to claims 1 and 2 wherein the first aluminium alloy is substantially the same as the first aluminium alloy.

5. Method according to any of the previous claims wherein the DED process comprises a laser with an specific energy density in the range of 10 - 50 J/mm2.

6. Method according to any of the previous claims wherein the sheet (1) comprises a vertical wall (11) around the hole (2',2") or notch (3',3'), the wall being obtained in the stamping step.

7. Method according to claim 6 wherein the vertical wall (11) comprises a crack area (12) and the step of depositing by a DED process comprises depositing the portion of the second high strength aluminium over the crack area (12) forming a welded spot (5).

8. Method according to claims 6 wherein the vertical wall (11) comprises a crack area (12) and the step of depositing by a DED process comprises depositing at least one layer of the second high strength aluminium in the form of a welded string (51) around at least a portion of the vertical wall (11) covering the crack area (12).

9. Method according to claim 6 wherein the step of depositing by a DED process comprises depositing at least one layer of the second high strength aluminium on the vertical wall (11) in the form of a welded string (51) to increase the height of the vertical wall (11).

10. Method according to any of claims 1 to 5 wherein the step of depositing by a DED process comprises depositing at least one layer of the second high strength aluminium on the sheet in the form of a welded string (51) to obtain a welded vertical wall.

11. Apparatus comprising

  - a refrigerated tool (4,4') insertable through the hole (2,2', 2") or notch (3,3',3") such that the tool (4,4') protrudes at least from one surface of the sheet (1) and fits snugly in the through hole (2,2', 2") or notch (3,3', 3"), the tool being of a high thermal conductivity copper alloy,
  the refrigerated tool being configured to
  - maintain the maximum instantaneous surface temperature of the tool below 300° C and,
  - cool down the temperature of the tool to below 100°C in less than 2 seconds when the welded portion of the second alloy starts solidifying
  - a DED apparatus (6) for depositing a portion (5, 51) of a second high strength aluminium onto the sheet around the through hole (2,2', 2") or notch (3,3', 3").

12. - Apparatus according to claim 11 wherein the coper refrigerated tool (4,4') comprises internal colling channels (41) configured for the circulation of a refrigerating fluid.

13. - Apparatus according to claims 11 or 12 wherein the copper refrigerated tool (4) comprises a cylindrical shaped part configured to be fitted in the hole (2,2',2").

14. - Apparatus according to claims 11 or 12 wherein the copper refrigerated tool (4') comprises a mouse hole shaped part configured to be fitted in the notch (3, 3', 3").

1

C

# FIG.1

1

M

# FIG.2

2

1

**FIG.3A**

4

1

**FIG.3B**

4

51

1

**FIG.3C**

2'  12  C'  11

FIG.4A

1

FIG.4B  4  11  12  1

5  11

FIG.4C

1

51  11

FIG.4D

1

FIG.5A

FIG.5B

FIG.5C

FIG.6A

FIG.6B

FIG.6C

FIG.7

EP 4 201 578 A1

FIG.8

M', M''

1

11

4'

41

41

42

43

# FIG.9

Europäisches
Patentamt

European
Patent Office

Office européen
des brevets

## EUROPEAN SEARCH REPORT

Application Number

EP 21 38 3218

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CN 105 665 709 A (UNIV JILIN) 15 June 2016 (2016-06-15) * see also inofficial translation; figures 3a, 3b * | 1-14 | INV. B23K26/342 B21D19/08 B22F10/40 B22F12/20 |
| A | US 7 073 561 B1 (HENN DAVID S [US]) 11 July 2006 (2006-07-11) * figures 12-14 * | 1-14 | B23K37/00 |
| A | US 4 956 989 A (NAKAJIMA KAZUTO [JP]) 18 September 1990 (1990-09-18) * column 1, line 62 - column 2, line 13; figure 4C * | 1-14 | ADD. B23K9/04 B23K103/10 |
| A | US 2020/038933 A1 (MÜTZE STEFAN [DE] ET AL) 6 February 2020 (2020-02-06) * paragraphs [0014], [0017], [0019], [0022], [0023], [0045] * | 1-14 | |

TECHNICAL FIELDS
SEARCHED        (IPC)

B23K
B21D
B22F

The present search report has been drawn up for all claims

| Place of search | Date of completion of the search | Examiner |
|---|---|---|
| Munich | 9 June 2022 | Kramer, Ellen |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

 ...............................................................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 21 38 3218

This annex lists the patent family members relating to the patent documents cited in the above-mentioned European search report.
The members are as contained in the European Patent Office EDP file on
The European Patent Office is in no way liable for these particulars which are merely given for the purpose of information.

09-06-2022

| Patent document cited in search report | | Publication date | Patent family member(s) | | Publication date |
|---|---|---|---|---|---|
| CN 105665709 | A | 15-06-2016 | NONE | | |
| US 7073561 | B1 | 11-07-2006 | NONE | | |
| US 4956989 | A | 18-09-1990 | GB | 2218023 A | 08-11-1989 |
| | | | JP | H0724871 B2 | 22-03-1995 |
| | | | JP | H01254327 A | 11-10-1989 |
| | | | KR | 890014185 A | 23-10-1989 |
| | | | US | 4956989 A | 18-09-1990 |
| US 2020038933 | A1 | 06-02-2020 | DE | 102017103729 A1 | 23-08-2018 |
| | | | EP | 3585531 A1 | 01-01-2020 |
| | | | KR | 20190120205 A | 23-10-2019 |
| | | | RU | 2743046 C1 | 12-02-2021 |
| | | | US | 2020038933 A1 | 06-02-2020 |
| | | | WO | 2018153615 A1 | 30-08-2018 |

EPO FORM P0459

For more details about this annex : see Official Journal of the European Patent Office, No. 12/82